# EUROPEAN PATENT SPECIFICATION

(11) **EP 2 121 277 B1**
(45) Date of publication and mention of the grant of the patent: **24.10.2012**
(21) Application number: 08702185.3
(22) Date of filing: 07.01.2008
(51) Int. Cl.: B29C 45/26, B29C 45/27

(54) **PROCESS FOR THE MANUFACTURE OF PACKS FOR COSMETIC, MEDICINAL, PHARMACEUTICAL PRODUCTS OR THE LIKE**
VERFAHREN ZUR HERSTELLUNG VON PACKUNGEN FÜR KOSMETISCHE, MEDIZINISCHE, PHARMAZEUTISCHE PRODUKTE ODER DERGLEICHEN
PROCÉDÉ DE FABRICATION D'EMBALLAGES DE PRODUITS COSMÉTIQUES, MÉDICAUX, PHARMACEUTIQUES ET ANALOGUES

(30) Priority: 22.01.2007 IT MO20070016
(43) Date of publication of application: 25.11.2009
(73) Proprietor: LAMEPLAST S.p.A., 41016 Novi di Modena (MO) frazione Rovereto sul Secchia (IT)
(72) Inventor: FONTANA, Antonio, I-41012 Carpi (IT)
(74) Representative: Brunacci, Marco
(86) International application number: PCT/IB2008/000016
(87) International publication number: WO 2008/090424

(56) References cited:
- EP-A- 1 405 708
- EP-A- 1 647 389
- EP-A- 1 652 649
- DE-A1- 10 351 060
- US-A- 2 799 435
- US-A1- 2001 015 512

## Description

### Technical Field

The present invention relates to a process for the manufacture of packs for cosmetic, medicinal, pharmaceutical products or the like.

### Background Art

It is common knowledge that some cosmetic, medicinal, or pharmaceutical products are distributed on the market inside special packs in the shape of elongated tubes, conventionally called "sticks" due to their particular slim and elongated shape.

These sticks consist of a tubular cement in plastic that extends lengthwise and has a first open end re-closable with a cap, and a second open end that is to be heat sealed once the cosmetic, medicinal or pharmaceutical product has been placed inside.

By its first open end, the stick usually has a threaded neck, onto which the cap can be screwed and which is associated to a dispensing body for the controlled application of the product to the user/patient.

The dispensing body, for example, consists of a shaped spout, sometimes flexible to adapt to the application surface, with a hole through which the product exits.

In addition, the dispensing body is obtained in a single body piece with a threaded neck or, alternatively, it consists of a separate element that can be interlocked into the neck.

The process for the manufacture of these packs consists of several operations.

The tubular element, for example, is obtained by extruding the plastic material through a shaped tube drawing plate while the threaded neck is obtained by injection moulding which is then heat sealed onto the first open end of the tubular element.

To the tube obtained in this way, the dispensing body is then applied if it is not already incorporated in the threaded neck.

Lastly, after the cap has been screwed onto the threaded neck, the tubular element is filled with the cosmetic, medicinal or pharmaceutical product and the second open end is then closed by heat sealing.

This manufacturing process has some drawbacks which are mostly connected to the extrusion of the tubular element which is often found to be impractical and difficult to do and which does not always result in packs with a sufficiently good surface quality.

Neither should we forget that making the tubular element by extrusion and the threaded neck by injection moulding inconveniently means that the two components have to be heat sealed which increases the complexity of the process and lengthens overall production time.

Other manufacturing processes are disclosed in EP 1 647 389, US 2 799 435. US 2001/015512, EP 1 652 649, which include a forming phases consisting in the injection moulding of plastic material. EP-A 1 405 708 discloses a manufacturing process according to the preamble of claim 1.

### Object of the Invention

The main aim of the present invention is to provide a process and equipment for the manufacture of packs for cosmetic, medicinal, pharmaceutical products or the like, that allows to produce high quality packs in a practical, easy and functional way.

Another object of the present invention is to provide a process that allows to overcome the mentioned drawbacks of the prior art within the ambit of a simple, rational and low cost solution.

The objects mentioned above are all achieved by this process for the manufacture of packs for cosmetic, medicinal, pharmaceutical products or the like, according to the contests of claim 1.

### Brief Description of the Drawings

Further characteristics and advantages of the present invention will appear more evident from the detailed description of some preferred but not exclusive embodiments of a process for the manufacture of packs for cosmetic, medicinal, pharmaceutical products or the like, illustrated indicatively by way of non limiting example, in the attached drawings wherein:
figure 1. is an axonometric schematic and partial view of a possible embodiment of the equipment used in the process according to the invention;
figure 2 is a plan view, on an enlarged scale, of a part of figure 1;
figure 3 is a section view, on an enlarged scale, of the equipment of figure 1 in the injection phase;
figure 4 is an axonometric view of the element formed by means of the equipment of figure 1;
figure 5 is an axonometric view of the element of figure 4 in a subsequent phase of processing;
figure 6 is an axonometric schematic and partial view of an alternative embodiment of the equipment used in the process according to the invention;
figure 7 is a section view, on an enlarged scale, of the equipment of figure 6 in the injection phase;
figure 8 is an axonometric view of the element formed by means of the equipment of figure 6;
figure 9 is an axonometric view of the element of figure 8 in a subsequent phase of processing.

### Embodiments of the Invention

With special reference to such figures, by 1 is globally designated an equipment for the manufacture of packs for cosmetic, medicinal, pharmaceutical products or the like.

The equipment 1 comprises at least one internally hollow outer mould 2, inside which at least one sinner core 3 is insertable.

Once the inner core 3 is inserted inside the outer mould 2, between the mould and the core a forming interspace 4 is obtained for forming an element 5.

The inside shape of the outer mould 2, in effect, serves to form the outer surface of the element 5 while the outer surface of the inner core 3 allows moulding its inner surface.

The element 5 is the stick type or the like, to contain a cosmetic, medicinal and/or pharmaceutical product, it has an elongated tubular shape with a first open end 6 and a second open end 7 opposite the first.

The interspace 4 has a first edge 8 and a second edge 9, ring-shaped, that correspond to the first open end 6 and to the second open end 7 of the element 5 respectively.

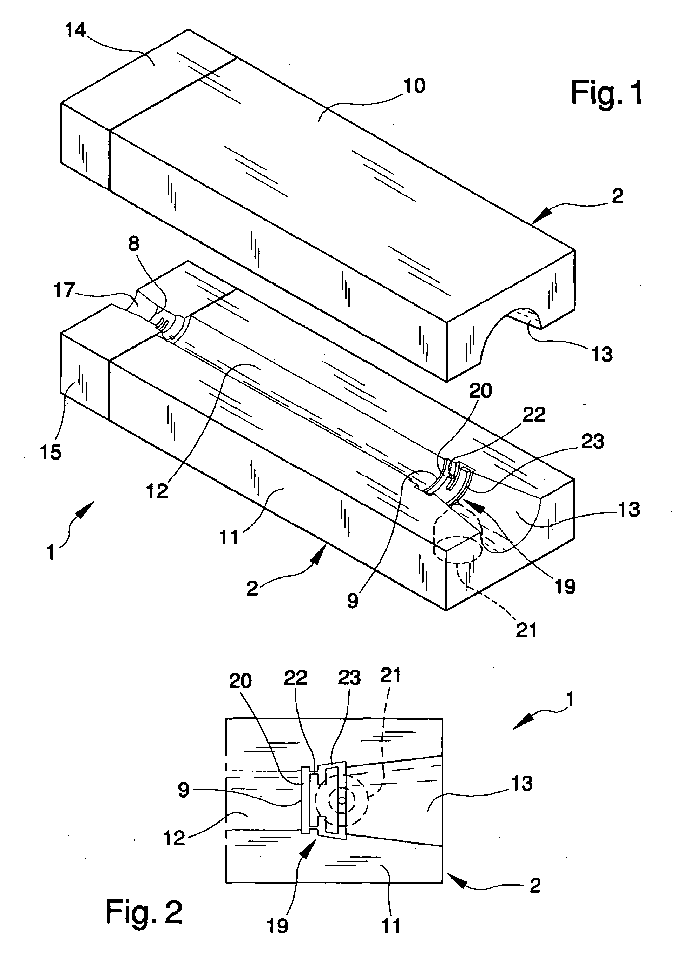

In a first embodiment of the equipment 1 illustrated in figures 1 to 3, the outer mould 2 comprises a first half shell 10 and a second half shell 11, that are approachable and separable one from the other and which have longitudinal hollows 12 reciprocally couplable for forming corresponding longitudinal halves of the side surface of the element 5.

The half shells 10 and 11, once coupled together, define a longitudinal opening 13 substantially of a truncated conical shape that is adjacent to the second edge 9 of the interspace 4 and allows the longitudinal introduction of the inner core 3. In addition to the first and second half shells 10 and 11, the outer mould 2 has a first auxiliary half shell 14 and a second auxiliary half shell 15, approachable and separable one from the other and suitable for forming a threaded neck 16 on the element 5 where the first open end 6 is.

In detail, the first auxiliary half shell 14 and the second auxiliary half shell 15 are associated, in an integral way, to the first half shell 10 and to the second half shell 11 respectively.

Different embodiments of the outer mould 2 are not, however, excluded where, for example, the first half shell 10 and the first auxiliary half shell 14 are made in a single body piece by material removal processing starting from a single initial piece or where, similarly, it is the second half shell 11 and the second auxiliary half shell 15 to be made in a single body piece.

The auxiliary half shells 14 and 15, once the outer mould 2 is closed, define an auxiliary longitudinal opening 17, substantially of a truncated conical shape, that is adjacent to the first edge 8 of the interspace 4.

The auxiliary longitudinal opening 17 allows the longitudinal introduction of an auxiliary inner core 18 which serves to form the inner surface of the threaded neck 16.

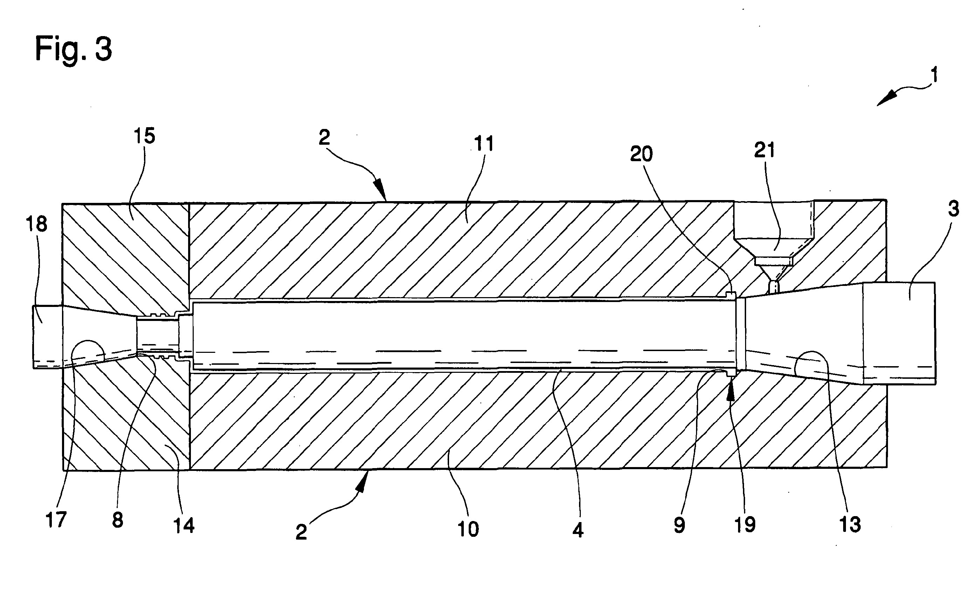

In actual facts, in the assembly configuration, the free end of the auxiliary inner core 18 inserted in the outer mould 2 through the auxiliary longitudinal opening 17 is against the free end of the inner core 3 introduced through the longitudinal opening 13 (figure 3).

However, alternative embodiments are possible where, for example, there is no auxiliary inner core 18, the bottom of the auxiliary half shells 14 and 15 is substantially closed and the inner core 3 is shaped to allow the formation of the inner surface of the threaded neck 16 as well.

Usefully, in the first and in the second half shell 10 and 11 an injection duct 19 is obtained by means of which plastic material at the fluid state can be injected under pressure inside the interspace 4.

This injection duct is obtained where the second edge 9 of the interspace 4 is and has a widened portion 20 where the plastic material at the fluid state accumulates.

The widened portion 20 has a ring shape and is adjacent and coaxial to the second edge 9 of the interspace 4.

Moreover, the injection duct 19 comprises a supply point 21 of the plastic material at the fluid state, a plurality of insertion points 22 of the plastic material at the fluid state into the widened portion 20 and a plurality of fluid connection sections 23 for connecting the supply point 21 with the insertion points 22.

The supply point 21 consists of a channel in the shape of an upside down cone with the axis transversal to the longitudinal hollows 12, which is obtained in the second half shell 11 and allows the incoming plastic material to be channelled to the connection sections 23.

The sections 23 consist of corresponding slots, substantially circular, obtained in the conical surface of the longitudinal opening 13, coaxial to the interspace 4. The insertion points 22, instead, are defined by narrow grooves, substantially parallel to the longitudinal direction of the interspace 4 and distributed at a substantially constant pitch around the widened portion 20.

Hence the plastic material at the fluid state injected under pressure in the channel 21 is distributed along the slots 23 and the grooves 22 and collects in the widened portion 20.

The constant pitch distribution of the insertion points 22 and the differences in thickness between the insertion points 22, the widened portion 20 and the interspace 4, in fact, see to it that the plastic material accumulates and is distributed evenly in the widened portion 20 before it flows into the interspace 4.

The pressure of the plastic material inside the interspace 4, therefore, is substantially kept constant and the injected fluid moves along in a well balanced fashion, homogeneous and progressive along the whole transversal section of the interspace, with no inconvenient peaks of pressure in the fluid, no localised accumulation of material and the defects linked to such phenomena.

With reference to the possible embodiment of the equipment 1 illustrated in figures 1 to 3, the process for the manufacture of packs for cosmetic, medicinal, pharmaceutical products or the like, provides a forming phase where the element 5 is formed which, in turn, consists of the following succession of steps:
- supplying the outer mould 2, the inner core 3 and the auxiliary inner core 18;
- injecting, under pressure, the plastic material at the fluid state inside the interspace 4 through the injection duct 19;
- hardening the plastic material in the interspace 4 and in the injection duct 19.

After the forming phase an extraction phase is provided of the element 5 from the interspace 4, done by opening the outer mould 2 and removing the inner core 3 and auxiliary inner core 18.

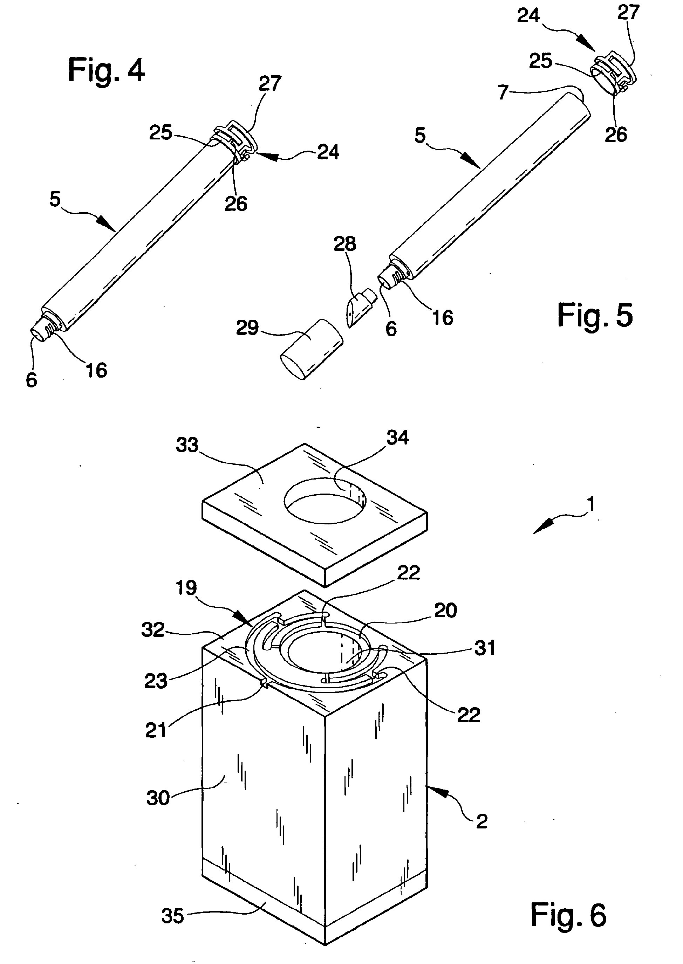

The element 5 made in this way (figure 4) has a block 24 of plastic material solidified in the injection duct 19 which extends from the second open end 7 in a longitudinal direction.

This block is composed of a thickened circular ring 25, a plurality of small straps 26 parallel to the longitudinal axis of the element 5 and a plurality of circular segments 27 that correspond to the parts formed inside the widened portion 20, the insertion points 22 and the sections 23 of the injection duct 19, respectively.

Subsequently, the process according to the invention entails a series of additional phases that consist of: removing the block 24 from the element 5, e.g. by cutting, shearing or other similar methods (figure 5); applying a dispensing body 28 inside the threaded neck 16 (figure 5); applying a closing cap 29 where the first open end (figure 5) is; introducing the cosmetic, medicinal and/or pharmaceutical product in the element 5 through the second open end 7; heat sealing the second open end 7.

The phases of introduction of the product and sealing of the second open end 7 are not illustrated in detail in the figures.

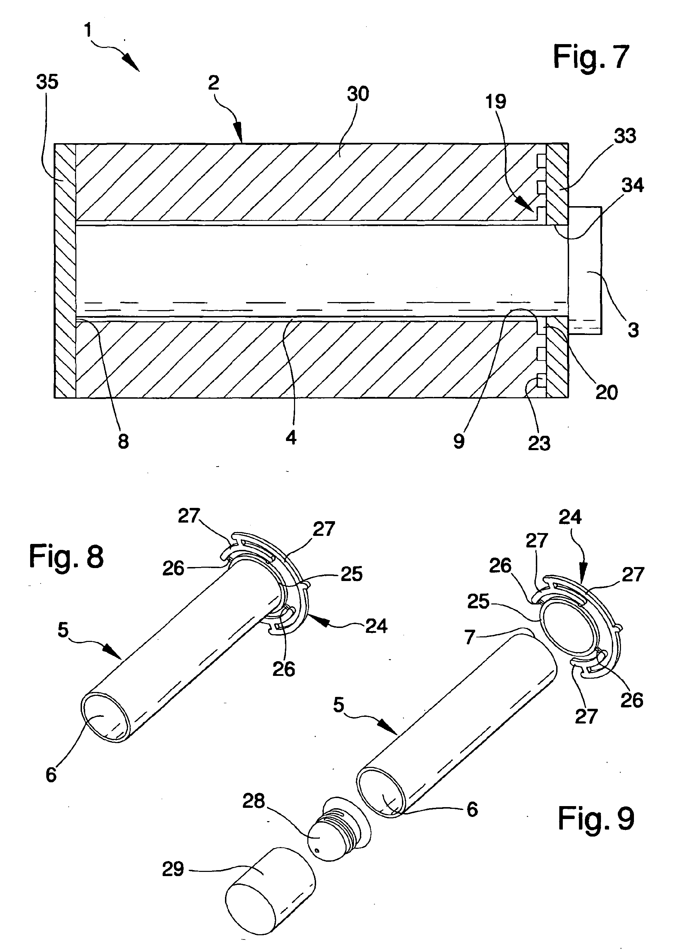

In an alternative embodiment of the equipment 1 according to the invention, illustrated in figures 6 and 7, the outer mould 2 is composed of a single piece body shell 30, parallelepiped in shape, which has a longitudinal cavity 31 to form the outer side surface of the element 5.

One end of the longitudinal cavity 31 opens onto a lateral side 32 of the single piece body shell 30 which allows the inner core 3 to be inserted in the outer mould 2.

Similarly to the embodiment of the equipment 1 illustrated in figures 1 to 3, this alternative embodiment also entails an injection duct 19 that has a widened portion 20, ring-shaped, coaxial and adjacent to the second edge 9 of the interspace 4, a supply point 21, a series of tapered insertion points 22 and a plurality of circular connection sections 23.

In the mould of figures 6 and 7, however, the injection duct 19 is made on the lateral side 32, around the second edge 9 of the interspace 4 and in a way that the connection sections 23 are concentric with each other with respect to the central axis of the longitudinal cavity 31.

To the lateral side 32 a plate 33 is also associable which allows to close the injection duct 19 and which has a made to measure insertion opening 34 for the inner core 3.

In actual facts, once the plate 33 is associated to the lateral side 32, the plastic material at the fluid state can be introduced into the injection duct 19 only through the supply point 21 that opens onto one side of the single piece body shell 30 adjacent to the lateral side 32.

In addition, the outer mould 2 comprises a closing wall 35 that closes the interspace 4 by the first edge 8; this wall is made integral with the side of the single piece body shell 30 opposite the lateral side 32 and the free end of the inner core 3 (figure 7) is against it in the assembly configuration.

With reference to the alternative embodiment of the equipment 1 illustrated in figures 6 and 7, the process for the manufacture of packs for cosmetic, medicinal, pharmaceutical products or the like, entails a formation phase to form the element 5 which, in turn, consists of the following succession of steps:
- supplying the outer mould 2 and the inner core 3;
- injecting, under pressure, the plastic material at the fluid state inside the interspace 4 through the injection duct 19;
- hardening the plastic material in the interspace 4 and in the injection duct 19.

After the forming phase the inner core 3 is pulled out from the single piece body shell 30 together with the plate 33 so as to extract the element 5 from the interspace 4.

Now, by pushing against the plate 33, the element 5 is separated from the inner core 3.

Similar to what is illustrated in relation to the equipment 1 of figures 1 to 3, the element 5 too, obtained by the equipment 1 of figures 6 and 7, has a block 24 of solidified plastic material in the injection duct 19 that extends to where the second open end 7 (figure 8) is.

This block is composed of a thickened circular ring 25, a plurality of small straps 26 transversal to the element 5 and a plurality of circular segments 27 that correspond to the parts formed, inside the widened portion 20, the insertion points 22 and the sections 23 of the injection duct 19, respectively.

When the element 5 has been extracted from the interspace 4, the subsequent phases of the process according to the invention are illustrated in figure 9 and consist of: removing the block 24 from the element 5, e.g. by cutting, shearing or some other similar methods; applying a threaded spout 36 on the first open end 6 of the element 5, e.g. by heat sealing or some similar techniques; screwing a closing cap 29 on the threaded spout 36.

Subsequently, the process according to the invention entails some subsequent phases, not illustrated in the figures, that consist of introducing the cosmetic, medicinal and/or pharmaceutical product in the element 5 through the second open end 7 and heat sealing the second open end 7.

It has in point of fact been found how the described invention achieves the proposed objects.

With regard to this, the fact is underlined that the particular idea of obtaining the tubular element of the pack by injection moulding allows to obtain packs for cosmetic, medicinal or pharmaceutical products of a high surface quality.

But it must not be forgotten that the process according to the invention allows, in at least one of the embodiments of the invention illustrated in this paper, to obtain the tubular element in a single body piece with the threaded neck and, therefore, enormously simplifying the following operations.

The fact is also underlined that the particular shape of the injection duct made in the equipment according to the invention allows to fill the outer mould on the entire length of the interspace completely and homogeneously.

The invention thus conceived is susceptible to numerous modifications and variations, all of which falling within the scope of the inventive concept.

In practice, the materials used, as well as the contingent shapes and dimensions, may be any according to requirements without because of this moving outsides the protection scope of the following claims.

## Claims

1. Process for the manufacture of packs for cosmetic, medicinal, pharmaceutical products or the like, comprises at least the steps of:
- forming an elongated element (5), substantially tubular in shape, in plastic material, to contain a cosmetic, medicinal, pharmaceutical product or the like, said element (5) comprising a first open end (6) and a second open end (7) opposite the first, said forming comprising the steps of:
- supplying at least one internally hollow outer mould (2) and one inner core (3) insertable in said mould (2) to define a forming interspace (4) of said element (5) between the mould (2) and the core (3) with a first and second ring-shaped edge (8, 9) corresponding to said first and said second open end (6, 7) of the element (5) respectively;
- injecting under pressure said plastic material at the fluid state inside said interspace (4) through an injection duct (19) created by said second edge (9) of the interspace (4) and comprising a widened portion (20) where said plastic material at the fluid state accumulates, said widened portion (20) being arranged adjacent to said second edge (9) of the interspace (4) and being substantially ring-shaped and coaxial to said second edge (9) of the interspace (4);
- hardening said plastic material;
- extracting said element (5) from said interspace (4);
**characterized by** the steps of:
- removing the plastic material solidified in said injection duct (19) from said element (5), including the plastic material solidified in said widened portion (20);
- introducing said product in said element (5) through said second open end (7);
- heat sealing said second open end (7).

2. Process according to claim 1, **characterized in that** it comprises applying a threaded spout (36) on said first open end (6).

3. Process according to claim 1 or 2, **characterized in that** it comprises applying a dispensing body (28) on said first open end (6).

4. Process according to claim 1 or 2 or 3, **characterized in that** it comprises applying a closing cap (29) where said first open end (6) is.

5. Process according to one or more of the preceding claims, **characterized in that** said injection duct (19) comprises at least one supply point (21) of said plastic material at the fluid state, at least one insertion point (22) of said plastic material at the fluid state in said widened portion (20), and at least one connection section (23) of said supply point (21) with said insertion point (22).

6. Process according to claim 5, **characterized in that** said injection duct (19) comprises a plurality of said connection sections (23).

7. Process according to claim 6, **characterized in that** said connection sections (23) are substantially circular.

8. Process according to claim 7, **characterized in that** said connection sections (23) are substantially coaxial.

9. Process according to claim 7, **characterized in that** said connection sections (23) are substantially concentric.

10. Process according to one or more of the claims 5 to 9, **characterized in that** said injection duct (19) comprises a plurality of said insertion points (22).

11. Process according to claim 10, **characterized in that** said insertion points (22) are substantially tapered.

12. Process according to claim 10 or 11, **characterized in that** said insertion points (22) are distributed at a substantially constant pitch around the longitudinal axis of said interspace (4).

13. Process according to one or more of the preceding claims, **characterized in that** said mould (2) comprises at least one first and at least one second half shell (10, 11), that are separable one from the other and have longitudinale hollows reciprocally couplable for forming corresponding longitudinal portions of the side surface of said element (5).

14. Process according to one or more of the preceding claims, **characterized in that** said mould (2) comprises at least one first and at least a second auxiliary half shell (14, 15), separable one from the other and suitable for forming a threaded neck (16) of said element (5) by said first open end (6).

15. Process according to claims 13 and 14, **characterized in that** said first half shell (10) and said first auxiliary half shell (14) are integrally associated with one another.

16. Process according to claims 13 and 14, **characterized in that** said second half shell (11) and said second auxiliary half shell (15) are integrally associated with one another.

17. Process according to claims 13 and 14, **characterized in that** said first half shell (10) and said first auxiliary half shell (14) are made in a single body piece.

18. Process according to claim 13 and 14, **characterized in that** said second half shell (11) and said second auxiliary half shell (15) are made it a single body piece.

19. Process according to one or more of the preceding claims, **characterized in that** said mould (2) comprises a single piece body shell (30) to form the side surface of said element (5).

20. Process according to one or more of the preceding claims, **characterized in that** said mould (2) comprises at least one wall (35) to close said interspace (4) by said first edge (8) of the interspace (4).

21. Process according to one or more of the preceding claims, **characterized in that** said mould (2) comprises at least one plate (33) to close said injection duct (19).

22. Process according to claim 21, **characterized in that** said plate (33) has an insertion opening (34) suitable for the snugly insertion of said core (3).

## Patentansprüche

1. Prozess für die Erstellung von Verpackungen für kosmetische, medizinische oder pharmazeutische Produkte oder dergleichen, der wenigstens die folgenden Schritte umfasst:
- Formen eines länglichen Elements (5) im Wesentlichen in Form eines Rohrs aus Kunststoff, um ein kosmetisches, medizinisches oder pharmazeutisches Produkt oder dergleichen zu enthalten, wobei das Element (5) ein erstes offenes Ende (6) und ein zweites offenes Ende (7) gegenüber dem ersten Ende aufweist, wobei das Formen die folgenden Schritte umfasst:
- Zuführen wenigstens einer innen hohlen Außengießform (2) und eines Innenkerns (3), der in die Gießform (2) einsetzbar ist, um zwischen der Gießform (2) und dem Kern (3) einen Formungszwischenraum (4) des Elements (5) mit einer ersten und einer zweiten ringförmigen Kante (8, 9), die dem ersten bzw. dem zweiten offenen Ende (6, 7) des Elements (5) entsprechen, zu definieren;
- Einspritzen unter Druck des Kunststoffs in dem Fluidzustand in den Zwischenraum (8) durch einen Einspritzrohrstutzen (19), der durch die zweite Kante (9) des zwischenraums (4) gebildet wird und einen erweiterten Abschnitt (20) aufweist, wo sich der Kunststoff in dem Fluidzustand ansammelt, wobei der erweiterte Abschnitt (20) in der Nähe der zweiten Kante (9) des zwischenraums (4) angeordnet ist und im Wesentlichen ringförmig und zu der zweiten Kante (9) des Zwischenraums (4) koaxial ist;
- Härten des Kunststoffs;
- Entnehmen des Elements (5) aus dem Zwischenraum (4);
**gekennzeichnet durch** die folgenden Schritte:
- Entfernen des verfestigten Kunststoffs in dem Einspritzrohrstutzen (19) aus dem Element (5), der den Kunststoff enthält, der sich in dem erweiterten Abschnitt (20) verfestigt hat;
- Einleiten des Produkts in das Element (5) **durch** das zweite offene Ende (7);
- wärmeversiegeln des zweiten offenen Endes (7).

2. Prozess nach Anspruch 1, **dadurch gekennzeichnet, dass** er das Anbringen eines Gewindeauslaufs (36) an dem ersten offenen Ende (6) umfasst.

3. Prozess nach Anspruch 1 oder 2, **dadurch gekennzeichnet, dass** er das Anbringen eines Spenderkörpers (28) an dem ersten offenen Ende (6) umfasst.

4. Prozess nach Anspruch 1 oder 2 oder 3, **dadurch gekennzeichnet, dass** er das Anbringen einer Verschlusskappe (29) dort, wo sich das erste offene Ende (6) befindet, umfasst.

5. Prozess nach einem oder mehreren der vorhergehenden Ansprüche, **dadurch gekennzeichnet, dass** der Einspritzrohrstutzen (19) wenigstens einen Versorgungspunkt (21) für den Kunststoff in dem Fluidzustand, wenigstens einen Einsetzpunkt (22) des Kunststoffs in dem Fluidzustand in dem erweiterten Abschnitt (20) und wenigstens einen Verbindungsabschnitt (23) des Versorgungspunkts (21) mit dem Einsetzpunkt (22) umfasst.

6. Prozess nach Anspruch 5, **dadurch gekennzeichnet, dass** der Einspritzrohrstutzen (19) mehrere Verbindungsabschnitte (23) umfasst.

7. Prozess nach Anspruch 6, **dadurch gekennzeichnet, dass** die Verbindungsabschnitte (23) im Wesentlichen kreisförmig sind.

8. Prozess nach Anspruch 7, **dadurch gekennzeichnet, dass** die Verbindungsabschnitte (23) im Wesentlichen koaxial sind.

9. Prozess nach Anspruch 7, **dadurch gekennzeichnet, dass** die Verbindungsabschnitte (23) im Wesentlichen konzentrisch sind.

10. Prozess nach einem oder mehreren der Ansprüche 5 bis 9, **dadurch gekennzeichnet, dass** der Einspritzrohrstutzen (19) mehrere Einsetzpunkte (22) umfasst.

11. Prozess nach Anspruch 10, **dadurch gekennzeichnet, dass** die Einsetzpunkte (22) im Wesentlichen konisch zulaufen.

12. Prozess nach Anspruch 10 oder 11, **dadurch gekennzeichnet, dass** die Einsetzpunkte (22) mit einer im Wesentlichen konstanten Schrittweite um die Längsachse des Zwischenraums (4) verteilt sind.

13. Prozess nach einem oder mehreren der vorhergehenden Ansprüche, **dadurch gekennzeichnet, dass** die Gießform (2) wenigstens eine erste und wenigstens eine zweite Halbschale (10, 11) umfasst, die voneinander getrennt werden können und longitudinale Hohlräume haben, die reziprok gekoppelt werden können, um entsprechende longitudinale Abschnitte der Seitenoberflächen des Elements (5) zu bilden.

14. Prozess nach einem oder mehreren der vorhergehenden Ansprüche, **dadurch gekennzeichnet, dass** die Gießform (2) wenigstens eine erste und wenigstens eine zweite Hilfshalbschale (14, 15) umfasst, die voneinander getrennt werden können und geeignet sind, einen mit Gewinde versehenen Hals (16) des Elements (5) durch das erste offene Ende (6) zu bilden.

15. Prozess nach den Ansprüchen 13 und 14, **dadurch gekennzeichnet, dass** die erste Halbschale (10) und die erste Hilfshalbschale (14) einander einteilig zugeordnet sind.

16. Prozess nach den Ansprüchen 13 und 14, **dadurch gekennzeichnet, dass** die zweite Halbschale (11) und die zweite Hilfshalbschale (15) einander einteilig zugeordnet sind.

17. Prozess nach den Ansprüchen 13 und 14, **dadurch gekennzeichnet, dass** die erste Halbschale (10) und die erste Hilfshalbschale (14) aus einem einzigen Körperteil hergestellt sind.

18. Prozess nach den Ansprüchen 13 und 14, **dadurch gekennzeichnet, dass** die zweite Halbschale (11) und die zweite Hilfshalbschale (15) aus einem einzigen Körperteil hergestellt sind.

19. Prozess nach einem oder mehreren der vorhergehenden Ansprüche, **dadurch gekennzeichnet, dass** die Gießform (2) eine einzige Körperteilschale (30) umfasst, um die Seitenoberfläche des Elements (5) zu bilden.

20. Prozess nach einem oder mehreren der vorhergehenden Ansprüche, **dadurch gekennzeichnet, dass** die Gießform (2) wenigstens eine Wand (35) umfasst, um den Zwischenraum (4) durch die erste Kante (8) des Zwischenraums (4) zu verschließen.

21. Prozess nach einem oder mehreren der vorhergehenden Ansprüche, **dadurch gekennzeichnet, dass** die Gießform (2) wenigstens eine Platte (33) umfasst, um den Einspritzrohrstutzen (19) zu verschließen.

22. Prozess nach Anspruch 21, **dadurch gekennzeichnet, dass** die Platte (33) eine Einsetzöffnung (34) besitzt, die für das enge Einsetzen des Kerns (3) geeignet ist.

## Revendications

1. Procédé de fabrication de conditionnements pour des produits cosmétiques, médicinaux, pharmaceutiques ou similaires, qui comprend au moins les étapes de :
- formage d'un élément allongé (5), de forme sensiblement tubulaire, dans de la matière plastique, pour contenir un produit cosmétique, médicinal, pharmaceutique ou similaire, ledit élément (5) comprenant une première extrémité ouverte (6) et une deuxième extrémité ouverte (7) opposée à la première, ledit formage comprenant les étapes de :
- fourniture d'au moins un moule extérieur creux intérieurement (2) et un noyau intérieur (3) insérable dans ledit moule (2) pour définir un espace interstitiel (4) de formage dudit élément (5) entre le moule (2) et le noyau (3) avec un premier et un deuxième bords annulaires (8, 9) correspondant respectivement auxdites première et deuxième extrémités ouvertes (6, 7) de l'élément (5) ;
- injection sous pression de ladite matière plastique à l'état fluide à l'intérieur dudit espace interstitiel (4) par l'intermédiaire d'un conduit d'injection (19) créé par ledit deuxième bord (9) de l'espace interstitiel (4) et comprenant une portion élargie (20) où ladite matière plastique à l'état fluide s'accumule, ladite portion élargie (20) étant située adjacente audit deuxième bord (9) de l'espace interstitiel (4) et étant sensiblement annulaire et coaxiale dudit deuxième bord (9) de l'espace interstitiel (4) ;
- durcissement de ladite matière plastique ;
- extraction dudit élément (5) dudit espace interstitiel (4) ;
***caractérisé par*** les étapes de :
- retrait de la matière plastique solidifiée dans ledit conduit d'injection (19) hors dudit élément (5), y compris la matière plastique solidifiée dans ladite portion élargie (20) ;
- introduction dudit produit dans ledit élément (5) par ladite deuxième extrémité ouverte (7) ;
- scellement à chaud de ladite deuxième extrémité ouverte (7).

2. Procédé selon la revendication 1, ***caractérisé en ce qu'**il* comprend l'application d'un bec fileté (36) sur ladite première extrémité ouverte (6).

3. Procédé selon la revendication 1 ou 2, *caractérisé en ce qu*'il comprend l'application d'un corps distributeur (28) sur ladite première extrémité ouverte (6).

4. Procédé selon la revendication 1, ou 2, ou 3, *caractérisé en ce qu*'il comprend l'application d'un capuchon de fermeture (29) en correspondance avec ladite première extrémité ouverte (6).

5. Procédé selon l'une quelconque des revendications précédentes, ***caractérisé en ce que*** ledit conduit d'injection (19) comprend au moins un point d'alimentation (21) de ladite matière plastique à l'état fluide, au moins un point d'insertion (22) de ladite matière plastique à l'état fluide dans ladite portion élargie (20), et au moins une section de liaison (23) dudit point d'alimentation (21) avec ledit point d'insertion (22).

6. Procédé selon la revendication 5, ***caractérisé en ce que*** ledit conduit d'injection (19) comprend une pluralité desdites sections de liaison (23).

7. Procédé selon la revendication 6, ***caractérisé en ce que*** lesdites sections de liaison (23) sont essentiellement circulaires.

8. Procédé selon la revendication 7, ***caractérisé en ce que*** lesdites sections de liaison (23) sont essentiellement co-axiales.

9. Procédé selon la revendication 7, ***caractérisé en ce que*** lesdites sections de liaison (23) sont essentiellement concentriques.

10. Procédé selon l'une ou plusieurs des revendications 5 à 9, ***caractérisé en ce que*** ledit conduit d'injection (19) comprend une pluralité desdits points d'insertion (22).

11. Procédé selon la revendication 10, ***caractérisé en ce que*** lesdits points d'insertion (22) sont essentiellement effilés.

12. Procédé selon la revendication 10 ou 11, ***caractérisé en ce que*** lesdits points d'insertion (22) sont répartis selon un pas sensiblement constant autour de l'axe longitudinal dudit espace interstitiel (4).

13. Procédé selon l'une ou plusieurs des revendications précédentes, ***caractérisé en ce que*** ledit moule (2) comprend au moins une première et au moins une deuxième demi-coques (10, 11), qui sont séparables l'une de l'autre et présentent des creux longitudinaux associables l'un à l'autre pour former des portions longitudinales correspondantes de la surface latérale dudit élément (5).

14. Procédé selon l'une ou plusieurs des revendications précédentes, ***caractérisé en ce que*** ledit moule (2) comprend au moins une première et au moins une deuxième demi-coques auxiliaires (14, 15), séparables l'une de l'autre et aptes à former un goulot fileté (16) dudit élément (5) par ladite première extrémité ouverte (6).

15. Procédé selon les revendications 13 et 14, ***caractérisé en ce que*** ladite première demi-coque (10) et ladite première demi-coque auxiliaire (14) sont solidairement associées l'une à l'autre.

16. Procédé selon les revendications 13 et 14, ***caractérisé en ce que*** ladite deuxième demi-coque (11) et ladite deuxième demi-coque auxiliaire (15) sont solidairement associées l'une à l'autre.

17. Procédé selon les revendications 13 et 14, ***caractérisé en ce que*** ladite première demi-coque (10) et ladite première demi-coque auxiliaire (14) sont réalisées dans une pièce monobloc.

18. Procédé selon les revendications 13 et 14, ***caractérisé en ce que*** ladite deuxième demi-coque (11) et ladite deuxième demi-coque auxiliaire (15) sont réalisées dans une pièce monobloc.

19. Procédé selon l'une ou plusieurs des revendications précédentes, ***caractérisé en ce que*** ledit moule (2) comprend une coque monobloc (30) de corps pour former la surface latérale dudit élément (5).

20. Procédé selon l'une ou plusieurs des revendications précédentes, ***caractérisé en ce que*** ledit moule (2) comprend au moins une paroi (35) pour fermer ledit espace interstitiel (4) sur le premier bord (8) de l'espace interstitiel (4).

21. Procédé selon l'une ou plusieurs des revendications précédentes, ***caractérisé en ce que*** ledit moule (2) comprend au moins une plaque (33) pour fermer ledit conduit d'injection (19).

22. Procédé selon la revendication 21, ***caractérisé en ce que*** ladite plaque (33) possède une ouverture d'insertion (34) apte à l'insertion sans jeu dudit noyau (3).
